# EUROPEAN PATENT APPLICATION

(11) **EP 4 641 993 A1**
(43) Date of publication of application: **29.10.2025**
(21) Application number: 24305637.1
(22) Date of filing: 25.04.2024
(51) Int. Cl.: H04L 27/26, H04L 5/00, H04L 25/03

(54) **WIRELESS COMMUNICATION SYSTEM WITH CHANNEL BONDING**

(71) Applicant: NXP B.V., 5656 AG Eindhoven (NL)
(72) Inventor: Martinez, Vincent Pierre, 31023 Toulouse Cedex 1 (FR); Cao, Rui, 5656 AG Eindhoven (NL); Liu, Ying, 5656 AG Eindhoven (NL)
(74) Representative: Schmütz, Christian Klaus Johannes

(57) **Abstract**

Wireless communication systems and methods are described, including a wireless communication system that includes a transceiver configured to generate Orthogonal Frequency-Division Multiplexing (OFDM) signals, perform signal shaping of an OFDM signal of the OFDM signals to generate a shaped OFDM signal by reducing magnitudes of one or more subcarriers of the OFDM signal near a center frequency of the OFDM signal, and wirelessly transmit the shaped OFDM signal.

## Description

### TECHNICAL FIELD

Embodiments of the subject matter described herein relate generally to communication systems, including communication systems that provide wireless vehicular communications such as vehicle-to-everything (V2X) communications.

### BACKGROUND

Vehicle-to-everything (V2X) is a vehicular communication system that is used for communication between a vehicle and any entity that may affect or be affected by the vehicle, with subcategories of V2X communication including Vehicle-to-Device (V2D), Vehicle-to-Grid (V2G), and Vehicle-to-Network (V2N), with V2N including further subcategories of Vehicle-to-Vehicle (V2V), Vehicle-to-Infrastructure (V2I), and Vehicle-to-Pedestrian (V2P).

V2X systems allow vehicles to communicate with their surroundings, with potential benefits including, but not limited to, traffic congestion reduction, environmental impact reduction, and road hazard avoidance.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures. Elements in the figures are illustrated for simplicity and clarity and have not necessarily been drawn to scale. The figures along with the detailed description are incorporated and form part of the specification and serve to further illustrate examples, embodiments and the like, and explain various principles and advantages, in accordance with the present disclosure, wherein:
FIG. 1 shows a wireless communication network, in accordance with various embodiments;
FIG. 2 shows an illustrative block diagram of a wireless communication network with at least one wireless communication device including signal shaping circuitry, in accordance with various embodiments;
FIG. 3 shows an illustrative comparison between an IEEE 802.11p Physical Layer Protocol Data Unit (PPDU) for transmission over a 10 MHz channel and an example IEEE 802.11bd PPDU for transmission using channel bonding between two adjacent 10 MHz channels, in accordance with various embodiments;
FIG. 4 shows a graph illustrating a Spectral Emission Mask (SEM) and a waveform corresponding to a preamble portion of a PPDU, such as the IEEE 802.11bd PPDU of FIG. 3, transmitted over two adjacent 10 MHz channels in accordance with two 10 MHz tone plans;
FIG. 5 shows a graph illustrating an SEM and a waveform corresponding to data symbols, midambles, or a portion of a preamble of an IEEE 802.1 1bd PPDU, such as the IEEE 802.1 1bd PPDU of FIG. 3, transmitted over two adjacent 10 MHz channels in accordance with a 20 MHz tone plan;
FIG. 6 shows illustrative wireless communication device having transceiver circuitry that includes signal shaping circuitry such as a notch filter, baseband signal generation circuitry configured to perform subcarrier attenuation, or a combination of these, in accordance with one or more embodiments;
FIG. 7 shows an illustrative process flow for a method of generating and transmitting an OFDM signal, such as an IEEE 802.1 1bd PPDU, where the method includes signal shaping via notch filtering, subcarrier attenuation, or a combination of these in accordance with various embodiments; and
FIG. 8 shows illustrative time-frequency representation of an Orthogonal Frequency-Division Multiplexing (OFDM) resource grid where subcarriers at or near a center frequency are attenuated or zeroed, in accordance with various embodiments.

### DETAILED DESCRIPTION

The following detailed description is merely illustrative in nature and is not intended to limit the embodiments of the subject matter or the application and uses of such embodiments. Furthermore, there is no intention to be bound by any expressed or implied theory presented in the preceding technical field, background, or the following detailed description.

For simplicity and clarity of illustration, the drawing figures illustrate the general manner of construction, and descriptions and details of well-known features and techniques may be omitted to avoid unnecessarily obscuring the present disclosure. Additionally, elements in the drawing figures are not necessarily drawn to scale. For example, the dimensions of some of the elements or regions in the figures may be exaggerated relative to other elements or regions to help improve understanding of embodiments described herein.

The terms "first," "second," "third," "fourth" and the like in the description and the claims, if any, may be used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "comprise," "include," "have" and any variations thereof, are intended to cover non-exclusive inclusions, such that a process, method, article, or apparatus that comprises a list of elements is not necessarily limited to those elements but may include other elements not expressly listed or inherent to such process, method, article, or apparatus. The term "coupled," as used herein, is defined as directly or indirectly connected in an electrical or non-electrical manner. As used herein the terms "substantial" and "substantially" mean sufficient to accomplish the stated purpose in a practical manner and that minor imperfections, if any, are not significant for the stated purpose. As used herein, the words "exemplary" and "example" mean "serving as an example, instance, or illustration." Any implementation described herein as exemplary or an example is not necessarily to be construed as preferred or advantageous over other implementations. In addition, certain terms may also be used herein for reference only, and thus are not intended to be limiting.

Directional references such as "top," "bottom," "left," "right," "above," "below," and so forth, unless otherwise stated, are not intended to require any preferred orientation and are made with reference to the orientation of the corresponding figure or figures for purposes of illustration.

Various embodiments described herein relate to wireless communication systems that are configured for Vehicle-to-Everything (V2X) communication including channel bonding in accordance with, for example, the IEEE 802.1 1bd Standard (2022), which is incorporated by reference herein in its entirety. Herein, the term "channel bonding" refers to the transmission of signals according to a tone plan with an associated first bandwidth (e.g., a 20 MHz tone plan) over two or more adjacent channels having bandwidths that are different from the first bandwidth (e.g., two adjacent 10 MHz channels). Wireless communication systems described herein may be configured to perform signal shaping during generation of Orthogonal Frequency-Division Multiplexing (OFDM) signals (which may be represented herein as "tones," "waveforms," or "in-phase / quadrature (IQ) samples", with tone representations corresponding to the frequency domain and IQ samples corresponding to the time domain), which may be organized as Physical Layer Protocol Data Units (PPDUs), such as IEEE 802.11bd PPDUs (i.e., PPDUs having a format in compliance with the IEEE 802.11bd Standard; sometimes referred to herein as "802.11bd PPDUs"). For example, one or more embodiments of a wireless communication system herein may be configured to shape a channel-bonded OFDM signal corresponding to an 802.11bd PPDU such that the OFDM signal complies with a transmit spectral emission mask (SEM), such as one of the Class A, B, C, or D SEMs defined in the ETSI EN 302 571 harmonized Standard and the IEEE 802.11p Standard (2010), each of which are incorporated by reference herein. Herein, the term "802.1 1bd" is intended to refer to the IEEE 802.1 1bd Standard. Herein, the term "802.1 1p" is intended to refer to the IEEE 802.11p Standard.

The label 802.1 1p, sometimes used throughout the text, may refer to circumstances in which the flag dot110CBActivated of a wireless communication system is set to true enabling communication outside the context of a Basic Service Set (BSS), as defined in the IEEE 802.11-2016 Standard or newer.

In one or more embodiments herein, a wireless communication system includes baseband signal generation circuitry, digital front end circuitry, and signal shaping circuitry configured to generate OFDM signals for wireless transmission via one or more antennas of the wireless communication system. The signal shaping circuitry may include a notch filter interposed between the baseband signal generation circuitry and the digital front end circuitry, where the notch filter is designed to reduce signal magnitudes at and around a center frequency of the notch filter. For example, the notch filter may be applied to an OFDM baseband signal generated by the baseband signal generation circuitry prior to upsampling, channel filtering, signal processing (e.g., Crest Factor Reduction (CFR), digital predistortion (DPD), or other suitable signal processing techniques), and digital-to-analog conversion of the OFDM baseband signal by the digital front end circuitry.

The signal shaping circuitry may additionally or alternatively include a subcarrier attenuation module, which may be implemented as part of the baseband signal generation circuitry (e.g., prior to IFFT operations). For example, the subcarrier attenuation module may attenuate (i.e., reduce magnitudes of) magnitudes of a subset of subcarriers in the OFDM signal at or around a target frequency, such as a center frequency of the OFDM signal. In one or more embodiments, such attenuation may include zeroing (setting to a zero value) magnitudes of the subset of subcarriers. This subcarrier attenuating may be performed after modulation (e.g., Quadrature Amplitude Modulation (QAM) or Quadrature Phase Shift Keying (QPSK) modulation) and symbol mapping and before IFFT and guard interval (GI) insertion and windowing stages.

In this way, wireless communication devices described herein may shape OFDM signals used to carry 802.11bd channel-bonded PPDUs, causing the OFDM signals to comply with one or more associated ETSI EN 302 571 harmonized Standard and the IEEE 802.11p Standard SEMs, where such channel-bonded OFDM signals would otherwise, without such signal shaping, fail to meet the requirements of the relevant SEM(s) defined in these Standards.

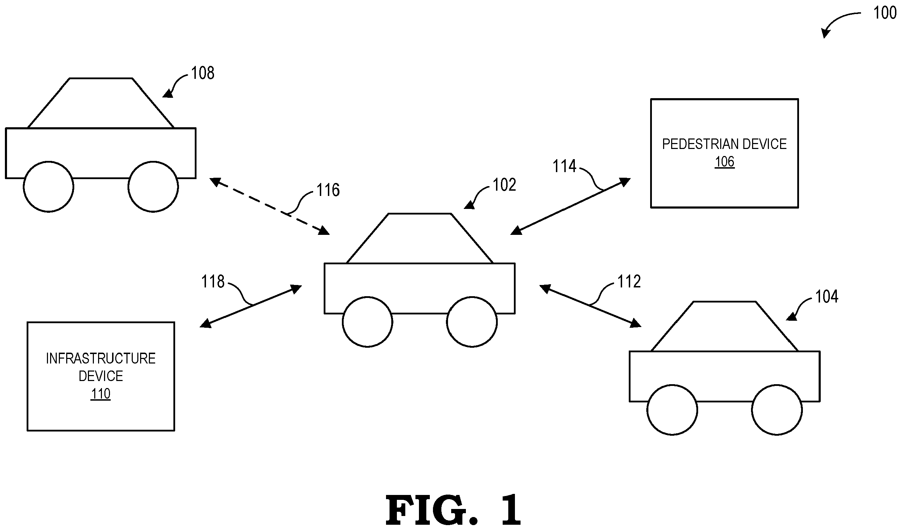

FIG. 1 shows an illustrative diagram of a wireless communication network 100 in which various devices may participate in wireless communications, such as Vehicle-to-Everything (V2X) communications, using communication circuitry configured to transmit and receive data using one or more wireless communication protocols (e.g., including either or both of IEEE 802.11p and IEEE 802.11bd). In the present example, the wireless communication network 100 includes vehicles 102, 104, and 108, a pedestrian communication device 106, and an infrastructure device 110.

The vehicles 102, 104, and 108 may include any combination of automobiles, trains, boats, or bicycles, as non-limiting examples. The pedestrian communication device 106 may include a mobile device or wearable device (e.g., smart watch), as non-limiting examples. The infrastructure device 110 may include a road-side unit or traffic controller (e.g., stoplight, gate, bridge, train crossing) as non-limiting examples. While not shown in the present example, it should be understood that the wireless communication network 100 may include additional vehicles, pedestrian communication devices, infrastructure devices, or other suitably configured wireless communication devices in accordance with one or more other embodiments.

In one or more embodiments, the vehicle 102 is configured to communicate with other devices using different protocols. For example, the vehicle 102 may be configured to communicate using a Next Generation Vehicle-to-Everything (V2X) (NGV) protocol, such as 802.11bd, with interoperability and coexistence capability for communicating via a legacy V2X protocol, such as 802.11p. The vehicle 104, the pedestrian communication device 106, and the infrastructure device 110 may each be configured to communicate with the vehicle 102 using the NGV protocol over wireless communication channels 112, 114, and 118, respectively. The vehicle 108 may be a legacy device that is not configured to use the NGV protocol, and may instead communicate with the vehicle 102 using the legacy V2X protocol via a wireless communication channel 116. In one or more embodiments, the communications by the vehicle 102, the vehicle 104, the pedestrian communication device 106, the vehicle 108, and the infrastructure device 110 using either the NGV protocol or the legacy V2X protocol may utilize one or more frequency bands (e.g., 10 MHz or 20 MHz frequency bands) between 5.875 GHz and 5.915 GHz.

In one or more embodiments, the vehicle 102 may be configured to communicate using the NGV protocol in a channel having a first bandwidth via channel bonding (e.g., as defined in the IEEE 802.11bd Standard) of two adjacent channels each having a second bandwidth (e.g., where the first bandwidth is twice the second bandwidth). Herein, two frequency channels are referred to as "adjacent" when the two channels are adjacent with respect to frequency. For example, a first 10 MHz channel in a frequency band of 5895 MHz to 5905 MHz is adjacent to a second 10 MHz channel in a frequency band of 5905 MHz to 5915 MHz. In one or more embodiments, the first bandwidth is nominally 20 MHz and the second bandwidth is nominally 10 MHz. In one or more embodiments, the vehicle 102 may be configured to shape signals used for NGV protocol communications to comply with an SEM as defined in either or both of the IEEE 802.11p and ETSI EN 302 571 Standards for 10 MHz channel spacing. For example, signal shaping performed by the vehicle 102 may include notch filtering, subcarrier attenuation, or a combination of these, which reduces the magnitude of a portion of each signal transmitted in the bonded channel by the vehicle 102 near a target frequency (e.g., within +/- 0.5 MHz of the target frequency), such as a center channel frequency of the transmitted signal. By using signal shaping to meet the requirements of such an SEM, the vehicle 102 may use channel bonding to communicate over a larger frequency band, thereby advantageously reducing the duration of Physical Layer Protocol Data Unit (PPDU) transmission while still complying with the requirements of the legacy V2X protocol (e.g., IEEE 802.11p) and other relevant standards (e.g., the ETSI EN 302 571 harmonized Standard).

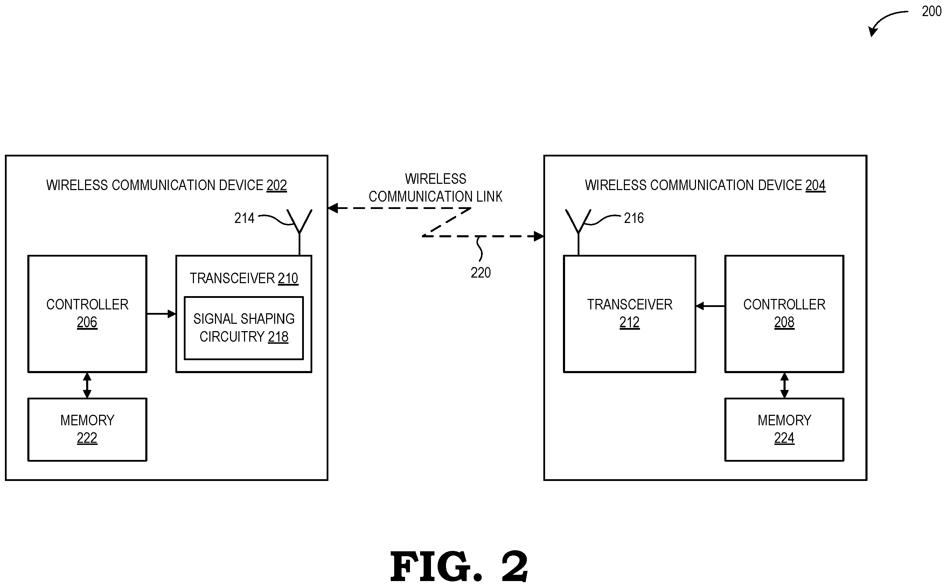

FIG. 2 shows an illustrative block diagram of a wireless communication network 200 that includes a wireless communication device 202 and a wireless communication device 204 that are configured to communicate via a wireless communication link 220. The wireless communication network 200 can be used in various applications, including automotive applications. In one or more embodiments, the wireless communication network 200 may be a V2X network for communication in accordance with one or more wireless communication protocols or standards, such as the IEEE 802.11bd Standard having interoperability and coexistence capability with the IEEE 802.11p Standard by prepending legacy fields (e.g., L-STF, L-LTF an L-SIG fields, described below).

For example, a wireless device supporting the IEEE 802.11bd Standard may be configured to selectively operate in accordance with either of a legacy protocol, defined in, for example, the IEEE 802.11p Standard, or an NGV protocol, defined in, for example, the IEEE 802.1 1bd Standard. Herein, an "NGV protocol" refers to a protocol according to which PPDUs are transmitted in accordance with an NGV format (e.g., including NGV fields, such as those defined in the TXVector table of the 802.1 1bd Standard). NGV protocol communications may include features such as LDPC channel coding, comparatively higher order modulations, communication over bonded, adjacent channels, or a combination of these. When communicating in accordance with an NGV protocol, PPDUs may include preambles with prepended legacy fields, where such legacy fields may be decoded and identified by "legacy" systems configured to operate according to a legacy standard, such as the IEEE 802.11p Standard. The inclusion of such legacy fields in PPDUs corresponding to the NGV protocol may allow for improved coexistence between legacy systems and NGV systems (e.g., between IEEE 802.11p systems and IEEE 802.11bd systems).

The wireless communication devices 202 and 204 may be implemented in hardware (e.g., circuitry including computer processing circuitry), software, firmware, or a combination thereof. It should be understood that functions of and the components included in the wireless communication network 200, as described in the present example, are intended to be illustrative and non-limiting, such that one or more other embodiments of the wireless communication network 200 may include more or fewer components and may implement the same, additional, or fewer functions. For example, in one or more other embodiments, the wireless communication network 200 may include more than two wireless communication devices or may include a different network topology than that shown in FIG. 2.

As a non-limiting example, the wireless communication network 200 may be implemented as part of an embodiment of wireless communication network 100 of FIG. 1, with the wireless communication device 202 being implemented as part of the vehicle 102 and the wireless communication device 204 being implemented as part of any of the pedestrian device 106, the vehicle 108, or the infrastructure device 110.

The wireless communication device 202 includes a controller 206, a transceiver 210, an antenna 214, and memory 222. The wireless communication device 204 includes a controller 208, a transceiver 212, an antenna 216, and a memory 224. The memories 222 and 224 may be non-transitory computer-readable memory devices, such as a semiconductor or solid-state memory, a random-access memory (RAM), or a read-only memory (ROM), as non-limiting examples. The controllers 206 and 208 may each include computer processing circuitry implemented in a microcontroller, a host processor, a digital signal processor (DSP), or a central processing unit (CPU), as non-limiting examples. The antennas 214 and 216 may each include one or more antenna elements and may include, as a non-limiting example, an induction type antenna such as a loop antenna. While the controller 206 is shown as being separate from the transceiver 210, it should be understood that the controller 206 may be integrated with the transceiver 210 in one or more embodiments. While the controller 208 is shown as being separate from the transceiver 212, it should be understood that the controller 208 may be integrated with the transceiver 212 in one or more embodiments.

As shown, the controller 206 is coupled (e.g., connected) to each of the transceiver 210 and the memory 222. The controller 206 may be configured to control (e.g., by retrieving and executing corresponding computer-readable instructions stored in the memory 222) the transceiver 210 to process received signals (e.g., received PPDUs) and generate outgoing signals (e.g., outgoing PPDUs), which may be received and transmitted, respectively, via the antenna 214 and the wireless communication link 220. The controller 206 may be configured to cause data from received signals proceed by the transceiver 210 to be stored in the memory 222. The controller 206 may be configured to cause data used in the generation of outgoing signals to be retrieved from the memory 222 and provided to the transceiver 210.

As shown, the controller 208 is coupled (e.g., connected) to each of the transceiver 212 and the memory 224. The controller 208 may be configured to control (e.g., by retrieving and executing corresponding computer-readable instructions stored in the memory 224) the transceiver 212 to process received signals (e.g., received PPDUs) and generate outgoing signals (e.g., outgoing PPDUs), which may be received and transmitted, respectively, via the antenna 216 and the wireless communication link 220. The controller 208 may be configured to cause data from received signals proceed by the transceiver 212 to be stored in the memory 224. The controller 208 may be configured to cause data used in the generation of outgoing signals to be retrieved from the memory 224 and provided to the transceiver 212.

In one or more embodiments, the wireless communication device 202 may be configured to transmit data in accordance with an NGV protocol, such as 802.11bd, using the transceiver 210 and the antenna 214. The transceiver 210 may include signal shaping circuitry 218. The signal shaping circuitry 218 may be implemented entirely in the transceiver 210 in one or more embodiments, as shown, or may be implemented at least partially outside of the transceiver 210 (e.g., by the controller 206) in accordance with one or more other embodiments. The signal shaping circuitry 218 may shape outgoing signals by reducing the magnitudes of one or more portions of the outgoing signals. For example, the signal shaping circuitry 218 may include a notch filter configured to create a notch in outgoing signals (e.g., at or around a center frequency of a channel in which those signals are transmitted), a subcarrier attenuation module configured to reduce the magnitudes of one or more subcarriers of the outgoing signals, or a combination of these.

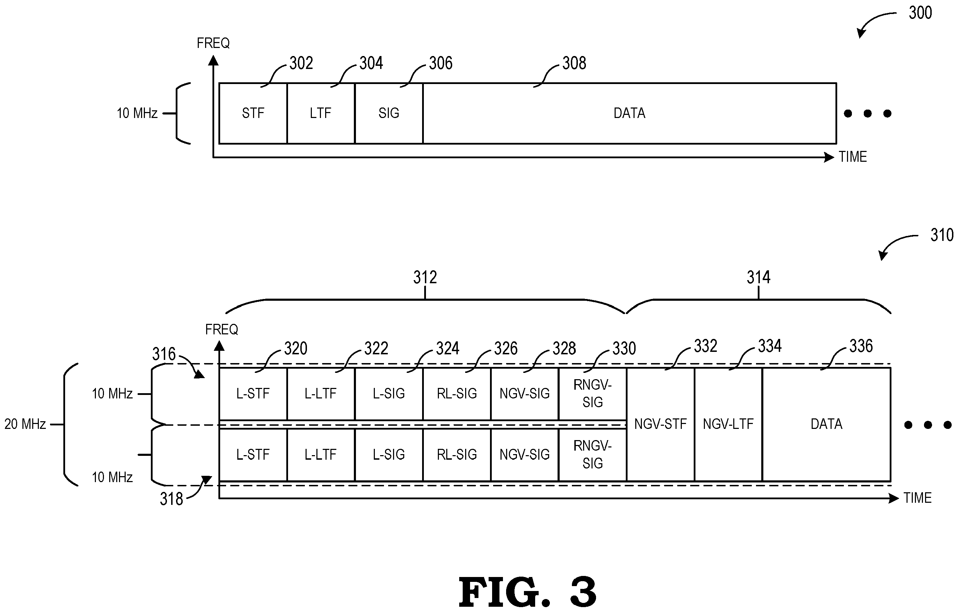

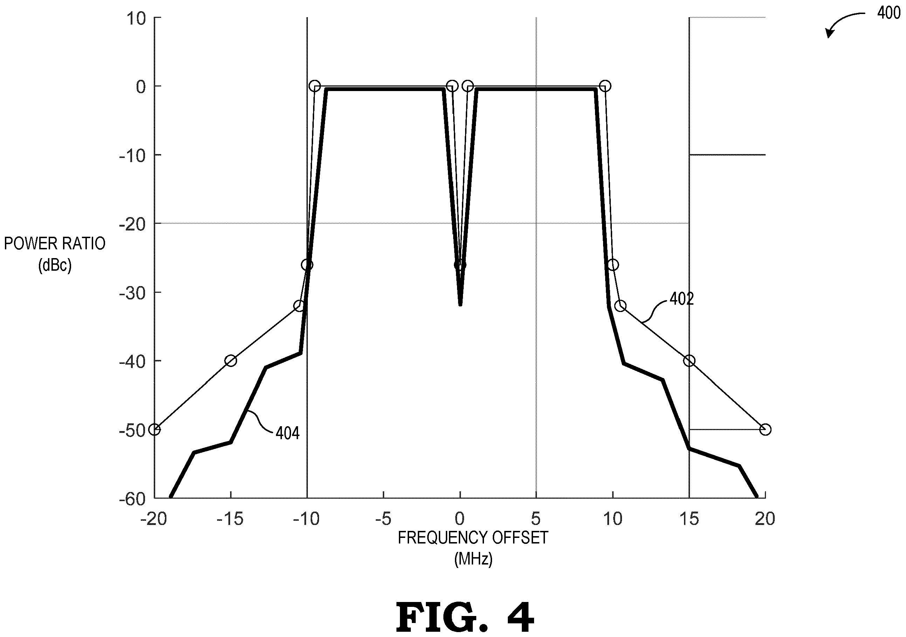

The signal shaping circuitry 218 may be configured to shape outgoing signals to comply with an SEM as defined in either or both of the IEEE 802.11p and ETSI EN 302 571 Standards for 10 MHz channel spacing (examples of which are shown in FIGS. 3 and 4). For example, the transceiver 210 may be configured to generate and transmit signals corresponding to 802.11bd PPDUs ("802.11bd PPDU signals"), where at least a portion of each 802.11bd PPDU signal utilizes channel bonding to bond two adjacent channels (e.g., 10 MHz channels) in order to transmit at least a portion of each outgoing 802.1 1bd PPDU signal in a bonded channel (e.g., a 20 MHz channel) having a comparatively larger (e.g., double) channel bandwidth. The signal shaping circuitry 218 may be configured to reduce the magnitude of a portion of the waveform of each outgoing 802.1 1bd PPDU signal near a center channel frequency (e.g., within +/- 0.5 MHz of the center frequency) of the bonded channel using notch filtering, subcarrier attenuation, or a combination of these. By shaping outgoing 802.11bd PPDU signals in this way, the wireless communication device 202 may use channel bonding to communicate over a larger frequency band, thereby advantageously reducing the duration of PPDU transmission, while still complying with 10MHz channel bandwidth and SEM requirements of, for example, the IEEE 802.11p Standard and the ETSI EN 302 571 Standards.

FIG. 3 shows a PPDU 300 having a format in compliance with the IEEE 802.11p Standard (sometimes referred to herein as the "802.11p PPDU 300") and a PPDU 310 having a format in compliance with the IEEE 802.1 1bd Standard (sometimes referred to herein as the "802.11bd PPDU 310") with channel bonding between two adjacent 10 MHz channels. The 802.11p PPDU 300 is an example of a legacy V2X protocol PPDU, and the 802.11bd PPDU 310 is an example of a NGV protocol PPDU.

As shown, the 802.11p PPDU 300 is transmitted in a 10 MHz channel. The 802.11p PPDU 300 includes a preamble having a non-High-Throughput (non-HT) short training field (STF) 302, a non-HT long training field (LTF) 304, and a non-HT signal field (SIG) 306, and includes a data field 308. The STF 302 includes information used for coarse synchronization. The LTF 304 includes information used for fine synchronization and initial channel estimation. The signal field 306 includes information that, when decoded by a receiving device, is used to determine transmission parameters. The data field 308 includes data corresponding to, for example, one or more Physical Service Data Units (PSDUs).

The 802.11bd PPDU 310 includes a first portion 312 and a second portion 314. The first portion 312 of the 802.11bd PPDU 310 is modulated based on two parallel 10 MHz tone plans over two adjacent 10 MHz channels, where the 802.11bd PPDU 310 includes a first preamble portion 316 and a second preamble portion 318. The first preamble portion 316 may include the same data as the second preamble portion 318. The waveform of the first preamble portion 316 may be offset with respect to phase (e.g., phase rotated) compared to the waveform of the second preamble portion 318. For example, the first preamble portion 316 is transmitted in a first 10 MHz channel, and the second preamble portion 318 is transmitted in a second 10 MHz channel that is directly adjacent to the first 10 MHz channel. One or more guard subcarriers (e.g., having relatively low signal magnitude or zero signal magnitude) are located at or near the edges of each 10 MHz channel in the first preamble portion 316 and the second preamble portion 318. Such guard subcarriers may not be loaded.

Each of the first preamble portion 316 and the second preamble portion 318 include a legacy non-HT STF (L-STF) 320, a legacy non-HT LTF (L-LTF) 322, a legacy signal field (L-SIG) 324, a repeated legacy signal field (RL-SIG) 326, an NGV signal field (NGV-SIG) 328, and a repeated NGV signal field (RNGV-SIG) 330. Legacy fields of the PPDU 310 may be defined according to a legacy protocol or associated standard, such as the 802.11p Standard. NGV fields of the PPDU 310 may be defined according to an NGV protocol or associated standard, such as the 802.11bd Standard (e.g., with one or more NGV fields being defined in a TXVector table in the 802.11bd Standard).

The L-STF 320, the L-LTF 322, the legacy signal field 324, and the repeated legacy signal field 326 may be the same as or similar to corresponding STF, LTF, and signal fields, of a legacy V2X protocol, such as IEEE 802.11p, such that legacy devices configured to communicate according to that legacy V2X protocol may be capable of receiving and interpreting these portions of the PPDU 310.

The NGV signal field 328 may define one or more NGV physical layer parameters, as a non-limiting example. The repeated NGV signal field 330 may be a repetition, in the time domain, of Orthogonal Frequency-Division Multiplexing (OFDM) symbols of the NGV signal field 328.

The second portion 314 of the 802.11bd PPDU 310 includes additional preamble fields, including an NGV-STF 332 and an NGV-LTF 334, and a data field 336. The second portion 314 is transmitted according to a full 20 MHz tone plan over a 20 MHz channel (e.g., a "bonded" 20 MHz channel) that includes the first 10 MHz channel and the second 10 MHz channel.

The NGV-STF 332 may be used to re-adjust receiver power gain and symbol synchronization, as a non-limiting example. The NGV-LTF 334 may be used for channel estimation for NGV data decoding, as a non-limiting example.

In one or more embodiments herein, a wireless communication device (e.g., a wireless communication device of the vehicle 102 of FIG. 1 or the wireless communication device 202 of FIG. 2) may perform signal shaping (e.g., notch filtering, subcarrier attenuation, or a combination thereof) to reduce the magnitude of the waveform used to transmit at least the portion 314 of the 802.11bd PPDU 310. In this way, the wireless communication device may comply with one or more SEMs that define limitations for channel bandwidth or spacing for transmitting in adjacent 10 MHz channels (e.g., one or more SEMs defined in the IEEE 802.1 1p Standard, the ETSI EN 302 571 harmonized Standard, or each of these).

FIG. 4 shows a graph 400 depicting frequency versus power ratio for an SEM 402 and a waveform 404. The waveform 404 corresponds to the transmission of a signal spanning over two adjacent 10 MHz channels in accordance with respective 10 MHz tone plans. The 10 MHz-based tones of the waveform 404 may correspond to one or more signals used to transmit the first portion 312 of the PPDU 310 of FIG. 3, for example. In the present example, the horizontal axis defines frequency offset relative to a center frequency, given here as 0 MHz, where the center frequency may represent a boundary between the adjacent 10 MHz-channels.

The SEM 402 may correspond to a combination of a first SEM requirement for a first 10 MHz channel and a second SEM requirement for a second 10 MHz channel that is immediately adjacent to the first 10 MHz channel, where the first and second SEM requirements are each defined in either or both of the IEEE 802.11p and ETSI EN 302 571 Standards for 10 MHz channel spacing. These standards require a certain degree of separation between adjacent 10 MHz channel transmissions. For example, the corresponding SEM defined in the ETSI EN 302 571 harmonized Standard and, separately, for C class transmitters in the IEEE 802.11p standard, may require the following limits at discrete offsets from the center frequency of each 10 MHz channel: 0 dBc at +/- 4.5 MHz, -26 dBc at +/- 5.0 MHz, -32 dBc at +/- 5.5 MHz, -40 dBc at +/- 10 MHz, and -50 dBc at +/- 15 MHz. For transmission of 10 MHz signals in adjacent 10 MHz channels, this results in the SEM 402 having a relatively low power ratio requirement (e.g., around -26 dBc) at the center frequency of the transmitted waveform 404 and relatively higher power ratios between -0.5 MHz and -4.5 MHz and between 0.5 MHz and 4.5 MHz offset from the center frequency of the waveform 404. The waveform 404 meets the requirements of the SEM 402 in the present example due, at least in part, to guard subcarriers at or around the center frequency of the waveform 404, due to the nature of the 10-MHz tone-plan (e.g., where subcarriers beyond a center portion of the 10 MHz channel, such as those beyond the center 8.125 MHz portion of the 10 MHz channel, are not loaded).

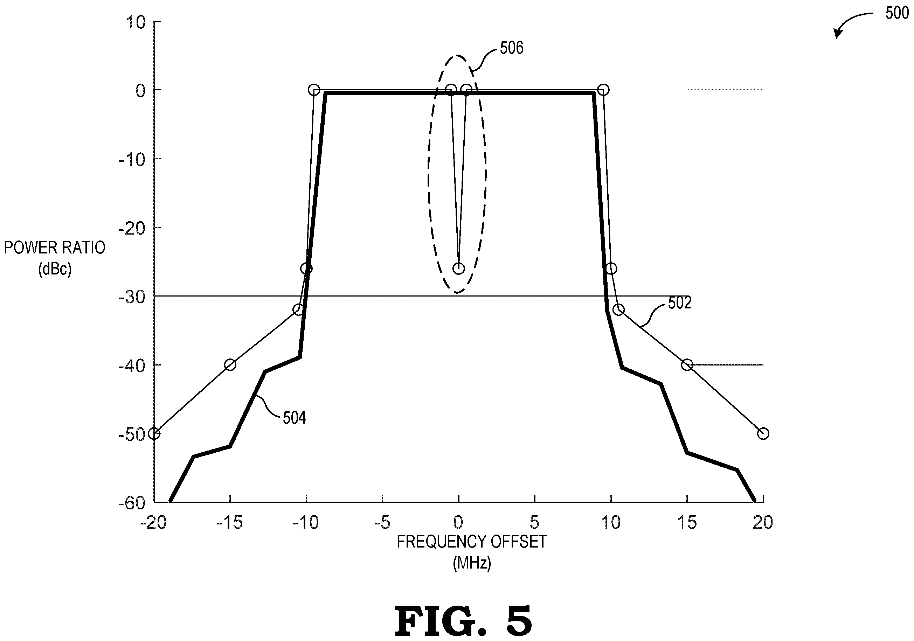

FIG. 5 shows a graph 500 depicting frequency versus power ratio for a SEM 502 and waveform 504. The waveform 504 to a signal to be transmitted in a 20 MHz channel. For example, the waveform 504 may correspond to a field of a PPDU (e.g., one of the fields 332, 334, or 336 of the 802.11bd PPDU 310 of FIG. 3) of transmitted in accordance with a 20 MHz tone plan over two adjacent, contiguous 10 MHz channels using a channel bonding approach as defined in accordance with an NGV protocol, such as IEEE 802.11bd. The waveform 504 may correspond to a signal generated (e.g., prior to any signal shaping) for transmitting the second portion 314 of the PPDU 310 of FIG. 3, for example. In the present example, the horizontal axis defines frequency offset relative to a center frequency, given here as 0 MHz, where the center frequency may represent a boundary between the adjacent 10 MHz channels.

The SEM 502 may be the same as or similar to the SEM 402 of FIG. 2 (e.g., an SEM as defined in either or both of the IEEE 802.11p and ETSI EN 302 571 Standards for 10 MHz channel spacing), and details thereof are not necessarily repeated here for sake of brevity. As shown, the waveform 504 does not comply with the SEM 502. For example, in the region 506, at the center frequency of the waveform 504, the SEM 502 limits the power ratio to -26 dBc, while the waveform 504 remains at around 0 dBc in the region 506, thereby exceeding the limits defined by the SEM 502.

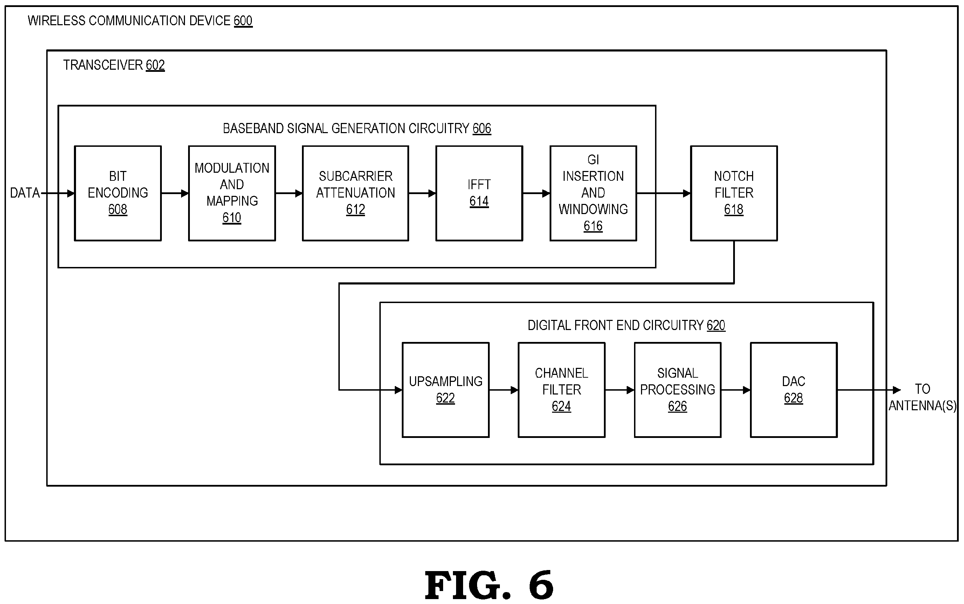

As will be described, a wireless communication device (e.g., the wireless communication device 202 of FIG. 2, the wireless communication device 600 of FIG. 6) that generates the an OFDM signal waveform, such as the waveform 504, may cause such a waveform to comply with an SEM, such as the SEM 502, by performing signal shaping of components (e.g., subcarriers) of the waveform to reduce the power ratio (e.g., magnitude) of the waveform at or around the center frequency (e.g., in the region 506). In one or more embodiments, such a wireless communication device may reduce the magnitude of the waveform at the center frequency by around 26 dBc or more, as a non-limiting example.

FIG. 6 shows a block diagram of an illustrative wireless communication device 600, which includes transceiver circuitry 602 having signal shaping circuitry for shaping an outgoing signal. The wireless communication device 600 may correspond to an example embodiment of the wireless communication device 202 of FIG. 2, as a non-limiting example. In one or more embodiments, the outgoing signal may be an OFDM signal of a sequence of OFDM signals (e.g., OFDM symbols) corresponding to an 802.11bd PPDU transmitted over a 20 MHz channel by bonding two adjacent 10 MHz sub-channels, as a non-limiting example. Herein, an "OFDM signal" may be represented as one or more OFDM symbols in the frequency domain and, separately, as one or more IQ samples in the time domain (corresponding to the OFDM symbols). It should be understood that, while not shown in the present example, the wireless communication device 600 may include other elements or devices in addition to the transceiver 602, such as one or more controllers (e.g., the controller 206 of FIG. 2), memory devices (e.g., the memory 222 of FIG. 2), or antennas (e.g., the antenna 214 of FIG. 2), as non-limiting examples.

In one or more embodiments the shaping circuitry of the transceiver circuitry 602 includes one or both of a subcarrier attenuation module 612 of baseband signal generation circuitry 606 and a notch filter 618 disposed between the baseband signal generation circuitry 606 and digital front end circuitry 620. In one or more embodiments, the subcarrier attenuation module 612 and the notch filter 618 are each configured to reduce the magnitudes of one or more subcarriers of a generated OFDM signal (e.g., at or near a center frequency of the OFDM signal, such as within +/- 0.5 MHz of the center frequency). In one or more embodiments, this controlled reduction in magnitude of the subcarriers may cause the resultant signal waveform (e.g., a 20 MHz tone for transmission in a bonded 20 MHz channel) to comply with or otherwise meet the requirements of a predefined SEM (e.g., the SEM 402 of FIG. 4 or the SEM 502 of FIG. 5) that defines limitations for transmissions in adjacent 10 MHz channel, as defined in the ETSI EN 302 571 harmonized Standard, the IEEE 802.11p Standard, or a combination of these, while remaining compliant to other requirements (e.g., maximum error vector magnitude (EVM) levels), ensuring correct performance and operation for the recipient of this PPDU. In one or more embodiments, the wireless communication device 600 may be included in a vehicle (e.g., the vehicle 102 of FIG. 1), and may be configured for V2X communications using an NGV protocol, such as IEEE 802.11bd.

As shown, the wireless communication device 600 includes a transceiver 602 having a transmit signal chain that may include baseband generation circuitry 606, a notch filter 618, and digital front end circuitry 620. The arrangement of the baseband generation circuitry 606 and the digital front end circuitry 620 in the present example is intended to be illustrative and non-limiting. For example, in one or more other embodiments, one or more components of presently shown to be included in the digital front end circuitry 620 (e.g., the upsampling module 622 or the channel filter 624) may instead be implemented by the baseband signal generation circuitry in the baseband domain.

The baseband signal generation circuitry 606 may include a bit encoding module 608, a modulation and mapping module 610, a subcarrier attenuation module 612, an inverse Fast Fourier Transform (IFFT) module 614, and a guard interval (GI) insertion and windowing module 616. The digital front end circuitry 620 may include an upsampling module 622, a channel filter 624, a signal processing module 626, and a digital-to-analog converter (DAC) 628. It should be understood that the notch filter 681 and any module or component of the baseband signal generation circuitry 606 and the digital front end circuitry 620 may be respectively implemented via hardware (e.g., circuitry), software, or any suitable combination of hardware and software, in accordance with various embodiments. As shown, the notch filter 618 may be interposed in the transmit signal path between the baseband signal generation circuitry 606 and the digital front end circuitry 620, in one or more embodiments.

The bit encoding module 608 may receive data (i.e., digital data) from a computer-readable memory (not shown) coupled to one or more inputs of the baseband signal generation circuitry 606. The bit encoding module 608 may be configured to encode such received data. In one or more embodiments, the bit encoding module 608 may be configured to encode the data using a suitable forward error correction (FEC) scheme.

The modulation and mapping module 610 may be coupled to one or more outputs of the bit encoding module 608. For example, the modulation and mapping module 610 may receive signals from the bit encoding module 608. In one or more embodiments, the modulation and mapping module 610 may receive the encoded data output from the bit encoding module 608 and may perform modulation (e.g., QAM or QPSK modulation) and symbol mapping using the encoded data.

In one or more embodiments, the modulation and mapping module 610 may, over time, generate modulated data (e.g., BPSK, QPSK, 16-QAM, 64-QAM, 256-QAM), representing modulation symbols worth for one or more OFDM symbols or frames, from the encoded data. For example, signals generated and output by the modulation and mapping module 610 may correspond to a sequence of OFDM symbols and corresponding subcarriers of one or more PPDUs. Each PPDU may include multiple resource elements, with each resource element corresponding to a respective OFDM symbol and subcarrier of the PPDU. In one or more embodiments, each PPDU may represent an NGV protocol PPDU, such as an 802.1 1bd PPDU (e.g., the 802.11bd PPDU 310 of FIG. 3, prior to signal shaping).

The subcarrier attenuation module 612 may be coupled to one or more outputs of the modulation and mapping module 610. For example, the subcarrier attenuation module 612 may receive signals from the modulation and mapping module 610. In one or more embodiments, the subcarrier attenuation module 612 may be configured to reduce the magnitude(s) of one or more subcarriers of one or more OFDM symbols of the OFDM signals (e.g., resulting in a reduction in magnitude of resource elements in those subcarriers for each OFDM symbol) generated by the modulation and mapping module 610. For example, to reduce the magnitudes of the one or more subcarriers of one or more OFDM symbols of the OFDM signals, the subcarrier attenuation module 612 may attenuate the subcarriers (e.g., reducing magnitude by a predetermined amount, where the predetermined amount may be between 20 dB and 30 dB as a non-limiting example) or may set the magnitudes of the subcarriers to zero or approximately zero (thereby "zeroing" those subcarriers, which may correspond to an approximation of -infinite dB attenuation). In one or more embodiments, attenuating a given subcarrier of an PPDU represented via one or more of the OFDM signals may include attenuating or zeroing all resource elements of that subcarrier within that PPDU. In one or more other embodiments, attenuating a given subcarrier of such a PPDU may include attenuating or zeroing only a subset of resource elements of that subcarrier within that PPDU.

The IFFT module 614 may be coupled to one or more outputs of the subcarrier attenuation module 612. For example, the IFFT module 614 may receive frequency domain signals (e.g., OFDM symbols) from the subcarrier attenuation module 612 and may generate time domain signals (e.g., IQ samples) in the time domain based on the received frequency domain signals. That is, the IFFT module 614 may convert signals output by the subcarrier attenuation module 612 from the frequency domain to the time domain. IQ samples generated by the IFFT module 614 may be a time-domain representation of one or more PPDUs to be transmitted by the wireless communication device 600. While an IFFT is performed to convert signals from the frequency domain to the time domain in the present example, it should be understood that this is intended to be illustrative and non-limiting. For example, in one or more other embodiments, another applicable implementation of the inverse Discrete Fourier Transform (IDFT) may instead be used to convert OFDM symbols from the frequency domain to the time domain.

The GI insertion and windowing module 616 may be coupled to one or more outputs of the IFFT module 614. For example, the GI insertion and windowing module 616 may receive IQ samples (corresponding to one or more PPDUs) from the IFFT module 614. In one or more embodiments, the GI insertion and windowing module 616 may be configured to add a guard interval portion (sometimes referred to as "cyclic prefix") to the OFDM symbols and which may smooth the edges of the OFDM symbols to reduce spectral leakage. Outputs of the GI insertion and windowing module 616 may be provided to the notch filter 618.

The notch filter 618 may be coupled to one or more outputs of the GI insertion and windowing module 616 of the baseband signal generation circuitry 606. For example, the notch filter 618 may receive signals from the GI insertion and windowing module 616. In one or more embodiments, the notch filter 618 may be configured to apply a notch to received signals centered at a target frequency (e.g., a center frequency of a 20 MHz channel in which outgoing signals are to be transmitted by the wireless communication device 600). The notch filter 618 may be a finite impulse response (FIR) filter, infinite impulse response (IIR) filter, or another equivalent class of digital filters, in accordance with various embodiments. For example, the notch filter 618 may reduce the magnitude of at least a portion of each signal output by the baseband signal generation circuitry 606 within a defined frequency range (e.g., +/- 0.5 MHz of a center frequency of the signal).

In one or more embodiments, the upsampling module 622 of the digital front end circuitry 620 may be coupled to one or more outputs of the notch filter 618. For example, the upsampling module 622 may include an input at which the upsampling module 622 receives signals from the notch filter 618. Signals received by the upsampling module 622 may be "shaped signals" having been shaped by one or both of the subcarrier attenuation module 612 and the notch filter 618. The upsampling module 622 may be configured to upsample the signals received at its input. In one or more embodiments, the upsampling module 622 may increase the sampling rate (e.g., by a factor of four), for the subsequent operation (channel filter) to shape a relatively wide-bandwidth signal (e.g., 40 MHz or 80 MHz wide). The upsampling may be realized by interjecting new samples in between existing samples, by means of digital filters such as, but not limited to, FIR filters.

The channel filter 624 may be coupled to one or more outputs of the upsampling module 622. For example, the channel filter 624 may receive signals from the upsampling module 622. The channel filter 624 may be configured to attenuate out-of-band portions of the signals output by the upsampling module 622 (e.g., to meet SEM requirements). For example, the channel filter 624 may include one or more bandpass filters.

The signal processing module 626 may be coupled to one or more outputs of the channel filter 624. For example, the signal processing module 626 may receive signals from the channel filter 624. The signal processing module 626 may be configured to perform additional signal processing of the signals output by the channel filter 624. For example, the signal processing module 626 may be configured to perform one or more of Crest Factor Reduction (CFR), digital predistortion (DPD), or other suitable signal processing of the signals output by the channel filter 624.

The DAC 628 may be coupled to one or more outputs of the channel filter 624. For example, the DAC 628 may receive signals from the channel filter 624. The DAC 628 may convert digital signals output by the signal processing module 626 into analog signals. The DAC 628 may output the analog signals to one or more antennas (e.g., the antenna 214 of FIG. 2) for wireless transmission. For example, wireless transmission of analog signals output by the DAC may correspond to wireless transmission of OFDM signals in accordance with one or more OFDM PPDUs, such as an 802.11bd PPDU (e.g., the PPDU 310 of FIG. 3).

It should be understood that the illustrated arrangement of modules and other elements in the transmit signal path of the wireless communication device 600 is intended to be illustrative and non-limiting. For example, in one or more other embodiments, the subcarrier attenuation module 612 may be omitted and signal shaping may be performed by the notch filter 618. Alternatively, in one or more other embodiments, the notch filter 618 may be omitted and signal shaping may be performed by the subcarrier attenuation module 612.

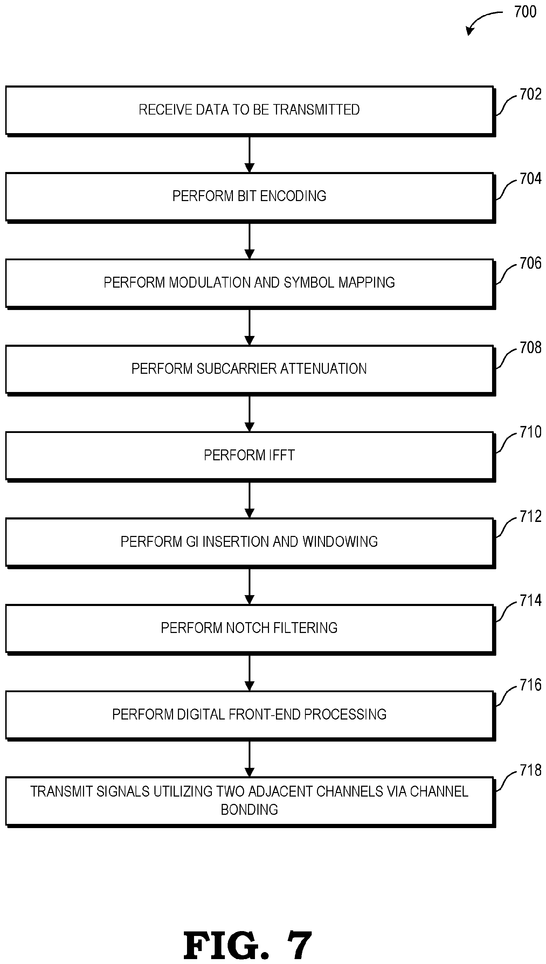

FIG. 7 shows an illustrative process flow for a method 700 by which a signal (e.g., an OFDM signal, which may correspond to one or more OFDM symbols of a PPDU) for transmission of a PPDU, such as an 802.1 1bd PPDU with channel bonding (e.g., the 802.1 1bd PPDU 310 of FIG. 3), may be generated and transmitted. In the method 700, signal shaping is performed during generation of the signal, such that the signal waveform complies with (i.e., falls within a frequency-domain boundary defined by) a predefined transmit SEM (e.g., the SEM 402 of FIG. 4 or the SEM 502 of FIG. 5), such as one of the Class A, B, C, or D SEMs defined in the ETSI EN 302 571 harmonized Standard and the IEEE 802.11p Standard. The method 700 may be carried out by a wireless communication device, such as the wireless communication device 202 of FIG. 2 or the wireless communication device 600 of FIG. 6. One or more steps of the method 700 may be carried out via execution of computer-readable instructions by computer processing circuitry (e.g., of a wireless communication device), where such instructions may be stored on a non-transitory computer readable medium.

In the present example, the method 700 is described with reference to elements of the wireless communication device 600 of FIG. 6. However, it should be understood that this is intended to be illustrative and not limiting. For example, other suitable wireless communication systems may be used to carry out the method 700 in one or more other embodiments.

At block 702, the bit encoding module 608 receives data to be transmitted, such as digital data payloads, which may be provided at least in part from a computer-readable memory coupled to the baseband signal generation circuitry 606. For example, the bit encoding module 608 may receive the data to be transmitted from one or more media access control (MAC) layer modules.

At block 704, the bit encoding module 608 performs bit-level encoding to encode the received data, thereby producing encoded data. The bit encoding module 608 may be configured to encode the data using a suitable forward error correction (FEC) scheme, as a non-limiting example. The bit encoding module may then provide the encoded data to the modulation and mapping module 610.

At block 706, the modulation and mapping module 610 receives the encoded data from the bit encoding module 608. The modulation and mapping module 610 may then perform modulation (e.g., QAM or QPSK modulation) and symbol mapping using the encoded data.

In one or more embodiments, the modulation and mapping module 610 may, over time, generate one or more OFDM symbols for one or more PPDUs, to be transmitted as one or more OFDM signals, via modulation and subsequent symbol mapping of the encoded data. For example, signals generated and output by the modulation and mapping module 610 may correspond to a sequence of OFDM symbols of one or more PPDUs. Each PPDU may include multiple resource elements, with each resource element corresponding to a respective OFDM symbol and subcarrier. In one or more embodiments, each PPDU may represent an NGV protocol PPDU, such as an 802.11bd PPDU (e.g., the 802.11bd PPDU 310 of FIG. 3, prior to signal shaping).

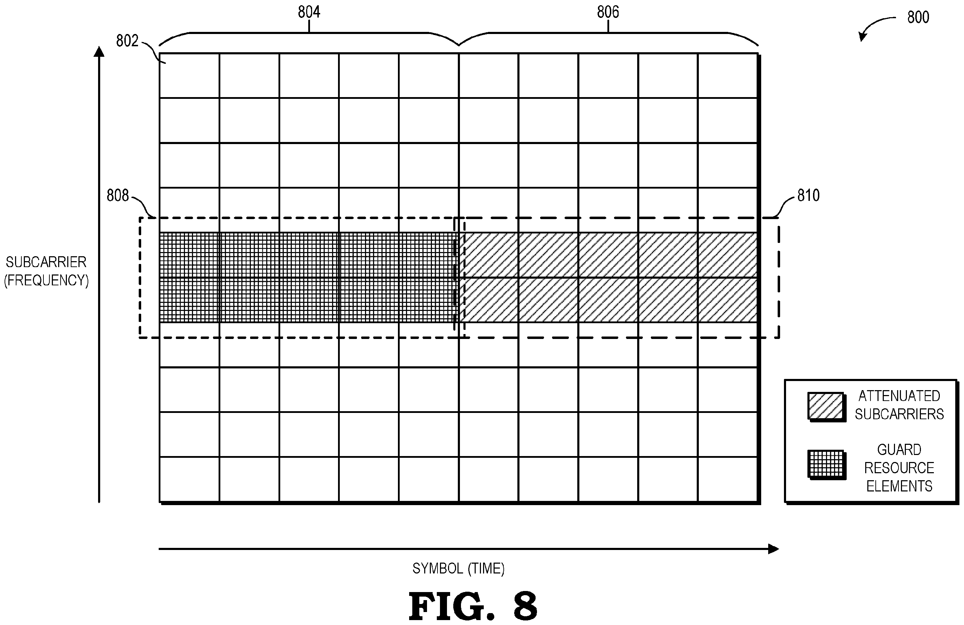

At block 708, the subcarrier attenuation module 612 reduces the magnitude(s) of (e.g., attenuates) one or more subcarriers of PPDUs (e.g., resulting in a reduction in magnitude of resource elements in those subcarriers in each PPDU) generated at block 706. For example, to reduce the magnitudes of the one or more subcarriers of the PPDUs, the subcarrier attenuation module 612 may attenuate the subcarriers or may set the magnitudes of the subcarriers to zero or approximately zero. In one or more embodiments, attenuating a given subcarrier of a PPDU may include attenuating or zeroing all resource elements of that subcarrier within that PPDU. In one or more other embodiments, attenuating a given subcarrier of a PPDU may include attenuating or zeroing only a subset of resource elements of that subcarrier within that PPDU. An example of an OFDM resource grid with attenuated subcarriers is shown in FIG. 8.

FIG. 8 shows an OFDM resource grid 800 representing at least a portion of a PPDU (e.g., the 802.1 1bd PPDU 310 of FIG. 3) in which subcarriers that may be attenuated during signal shaping at block 708 of the method 700 of FIG. 7. The OFDM resource grid 800 is described here with reference to the method 700 of FIG. 7 and the wireless communication device 600 of FIG. 6. It should be noted that the number of symbols and subcarriers shown in the OFDM resource grid 800 is intended to be illustrative and non-limiting, and that more or fewer symbols and subcarriers than those shown in the present example may be included in various other embodiments of the OFDM resource grid 800.

In the OFDM resource grid 800, a first set of OFDM symbols 804 corresponds to a first preamble portion of a PPDU (e.g., the first portion 312 of the 802.11bd PPDU 310 of FIG. 3) to be transmitted in two adjacent 10 MHz channels without channel bonding, and a second set of OFDM symbols 806 corresponds to additional preamble fields (e.g., fields 332, 334 of FIG. 3) and a data portion (e.g., the data field 336 of FIG. 3) of the PPDU (e.g., the second portion 314 of the 802.11bd PPDU 310 of FIG. 3).

In the OFDM resource grid 800, resource elements, such as the resource element 802, are arranged in rows of subcarriers (each corresponding to a respective frequency range) and columns of symbols (each corresponding to a respective time window). In the present example, subcarriers at or near the center frequency of OFDM resource grid 800 include guard resource elements 808 in the first set of symbols 804 and attenuated subcarriers 810 in the second set of symbols 806. The guard resource elements 808 may correspond to the edges of two adjacent 10-MHz channels, and may be provided in the first set of symbols 804 having relatively low magnitudes or zero magnitudes in accordance to 10 MHz channel SEM requirements, (e.g., between the first preamble portion 316 and the second preamble portion 318 of FIG. 3). While the number of guard resource elements 808 is shown to be equal to the number of resource elements of the attenuated subcarriers 810 in the present example, this is intended to be illustrative and non-limiting. In one or more other embodiments, the respective quantities of the guard resource elements 808 and the resource elements of the attenuated subcarriers 810 are different and may span respectively different quantities of OFDM symbols.

Compared to the guard resource elements 808 of the first set of symbols 804, which may not carry data in one or more embodiments, the resource elements of the attenuated subcarriers 810 of the second set of symbols 806 may initially carry preamble information or data (e.g., corresponding to portions of the NGV-STF block 332, NGV-LTF block 334, or data block 336 of the 802.11bd PPDU 310 of FIG. 3). In one or more embodiments, the attenuated subcarriers 810 of the second set of OFDM symbols 806 are reduced in magnitude (e.g., having their respective magnitudes attenuated or set to zero), for example, by the subcarrier attenuation module 612 at block 708 of the method 700. In one or more embodiments, attenuation is not applied to the guard resource elements 808 by the subcarrier attenuation module 612. It should be noted that the attenuated subcarriers 810 may be further reduced in magnitude by a notch filter, such as the notch filter 618, after attenuation by the subcarrier attenuation module 612. For example, notch filtering may be applied to the outputs of the guard interval (GI) insertion and windowing module 616, as described above. By attenuating the attenuated subcarriers 810 with either or both of the notch filter 618 and the subcarrier attenuation module 612 when generating one or more OFDM signals corresponding to the OFDM resource grid 800, compliance of the resultant signal waveform with one or more SEMS (e.g., an SEM (e.g., class A, class B, class C, or class D) defined for 10 MHz channel bandwidth signals in the IEEE 802.11p Standard, an SEM defined for 10 MHz channel bandwidth signals the ETSI EN 302 571 harmonized Standard, or a combination of these) may be advantageously improved. For example, such improved compliance may be advantageous for one or more embodiments in which a PPDU associated with the OFDM resource grid 800 is transmitted over two bonded, adjacent 10 MHz channels for effective transmission over a 20 MHz channel.

Returning to FIG. 7, at block 710 of the method 700, the IFFT module 614 performs an IFFT on the signals (e.g., OFDM symbols) output by the subcarrier attenuation module 612 to generate corresponding IQ samples.

At block 712, the GI insertion and windowing module 616 adds one or more guard interval portions to the IQ samples output by the IFFT module 614. The windowing operation performed by the GI insertion and windowing module 616 may smooth the edges of the OFDM signals and may reduce spectral leakage.

At block 714, the notch filter 618 may apply a notch to the IQ samples output by the GI insertion and windowing module 616. In one or more embodiments, the notch filter 618 may be configured to apply a notch to received signals centered at a target frequency (e.g., a center frequency of a 20 MHz channel in which outgoing signals are to be transmitted by the wireless communication device 600). The notch filter 618 may be a finite impulse response (FIR) filter or infinite impulse response (IIR) filter, or any other form of digital filter, in accordance with various embodiments. For example, the notch filter 618 may reduce the magnitude of at least a portion of each OFDM signal output by the GI insertion and windowing module 616 within a defined frequency range (e.g., +/- 0.5 MHz of a center frequency of the signal).

Applying a notch to the OFDM signals using the notch filter 618 may improve compliance of the resultant signal waveform with a SEM, such as an SEM (e.g., class A, class B, class C, or class D) defined for 10 MHz channel bandwidth signals in the IEEE 802. 11p Standard, an SEM defined for 10 MHz channel bandwidth signals the ETSI EN 302 571 harmonized Standard, or a combination of these.

At block 716, the digital front end circuitry 620 (e.g., including the upsampling module 622, the channel filter 624, the signal processing module 626, the DAC 628, or a suitable combination of these) may perform digital front end processing on the signal (e.g., IQ samples that have been shaped by the one or both of the notch filter 618 and the subcarrier attenuation module 612) output by the notch filter 618. For example, the digital front end circuitry 620 may perform upsampling, channel filtering, CFR, DPD, digital-to-analog conversion, or any suitable combination of these when processing the OFDM signals provided by the notch filter 618.

At block 718, after processing of the OFDM signals by the digital front end circuitry 620, the wireless communication device 600 transmits the processed OFDM signals utilizing adjacent channels using channel bonding. In one or more embodiments, the wireless communication device 600 may transmit the OFDM signals in a 20 MHz channel by channel bonding two adjacent 10 MHz channels via channel bonding in accordance with, for example, the IEEE 802.11bd Standard.

In an example embodiment, a wireless communication system includes transceiver circuitry configured to generate a plurality of Orthogonal Frequency-Division Multiplexing (OFDM) signals, perform signal shaping of an OFDM signal of the plurality of OFDM signals to generate a shaped OFDM signal by reducing magnitudes of one or more subcarriers of the OFDM signal near a center frequency of the OFDM signal, and wirelessly transmit the shaped OFDM signal.

In one or more embodiments, the transceiver circuitry is further configured to perform signal shaping of each OFDM signal of the plurality of OFDM signals to generate a plurality of shaped OFDM signals by reducing magnitudes of one or more subcarriers of each of the plurality of OFDM signals near respective center frequencies the plurality of OFDM signals, and wirelessly transmit the plurality of shaped OFDM signals.

In one or more embodiments, the plurality of OFDM signals corresponds, in a frequency domain, to a plurality of OFDM symbols of at least one physical layer protocol data unit (PPDU) in accordance with a Next Generation Vehicle-to-Everything (NGV) protocol.

In one or more embodiments, to wirelessly transmit the plurality of shaped OFDM signals, the transceiver circuitry is further configured to wirelessly transmit at least a first subset of the plurality of shaped OFDM signals based on a first tone plan over a first channel having a first channel bandwidth via bonding of a second channel and a third channel each respectively having a second channel bandwidth.

In one or more embodiments, the first channel bandwidth is 20 MHz and the second channel bandwidth is 10 MHz.

In one or more embodiments, the first subset of the plurality of shaped OFDM signals includes a data portion of the PPDU.

In one or more embodiments, to wirelessly transmit the plurality of shaped OFDM signals, the transceiver circuitry is further configured to wirelessly transmit at least a second subset of the plurality of shaped OFDM signals based on a second tone plan over the second channel and the third channel.

In one or more embodiments, the second subset of the plurality of shaped OFDM signals includes a first preamble portion of the PPDU and a second preamble portion of the PPDU, and the transceiver circuitry is further configured to transmit the first preamble portion over the second channel and, concurrently, transmit the second preamble portion over the third channel.

In one or more embodiments, the transceiver circuitry includes a notch filter configured to reduce the magnitude of a portion of the OFDM signal near the center frequency of the OFDM signal.

In one or more embodiments, the transceiver circuitry includes a subcarrier attenuation module configured to reduce the magnitudes of the one or more subcarriers of the OFDM signal near the center frequency of the OFDM signal.

In one or more embodiments, the transceiver circuitry includes a notch filter configured to reduce the magnitude of a portion of the OFDM signal near the center frequency of the OFDM signal, and a subcarrier attenuation module configured to reduce the magnitudes of the one or more subcarriers of the OFDM signal near the center frequency of the OFDM signal.

In an example embodiment, a method includes generating, by transceiver circuitry of a wireless communication system, a plurality of Orthogonal Frequency-Division Multiplexing (OFDM) signals, performing, by the transceiver circuitry, signal shaping of an OFDM signal of the plurality of OFDM signals to generate a shaped OFDM signal by reducing magnitudes of one or more subcarriers of the OFDM signal near a center frequency of the OFDM signal, and wirelessly transmitting, by the transceiver circuitry, the shaped OFDM signal.

In one or more embodiments, the method further includes performing, by the transceiver circuitry, signal shaping of each OFDM signal of the plurality of OFDM signals to generate a plurality of shaped OFDM signals by reducing magnitudes of one or more subcarriers of each of the plurality of OFDM signals near respective center frequencies the plurality of OFDM signals, and wirelessly transmitting, by the transceiver circuitry, the plurality of shaped OFDM signals.

In one or more embodiments, the plurality of OFDM signals corresponds to a plurality of OFDM symbols representing a physical layer protocol data unit (PPDU) in accordance with a Next Generation Vehicle-to-Everything (NGV) protocol.

In one or more embodiments, wirelessly transmitting the plurality of shaped OFDM signals further includes wirelessly transmitting, by the transceiver circuitry, at least a first subset of the plurality of shaped OFDM signals based on a first tone plan over a first channel having a first channel bandwidth via channel bonding of a second channel and a third channel each respectively having a second channel bandwidth.

In one or more embodiments, the first channel bandwidth is 20 MHz and the second channel bandwidth is 10 MHz.

In one or more embodiments, the first subset of the plurality of shaped OFDM signals corresponds to a data portion of the PPDU, and wirelessly transmitting the plurality of shaped OFDM signals further includes wirelessly transmitting at least a second subset of the plurality of shaped OFDM signals based on a second tone plan over the second channel and the third channel. The second subset of the plurality of shaped OFDM signals includes a first preamble portion of the PPDU and a second preamble portion of the PPDU, and the transceiver circuitry is further configured to transmit the first preamble portion in the second channel and, concurrently, transmit the second preamble portion in the third channel.

In one or more embodiments, performing the signal shaping of the OFDM signal includes filtering, by a notch filter, the OFDM signal to reduce the magnitude of a portion of the OFDM signal near the center frequency of the OFDM signal.

In one or more embodiments, performing the signal shaping of the OFDM signal includes attenuating, by a subcarrier attenuation module, the one or more subcarriers of the OFDM signal to reduce the magnitudes of the one or more subcarriers of the OFDM signal near the center frequency of the OFDM signal.

In one or more embodiments, performing the signal shaping of the OFDM signal includes attenuating, by a subcarrier attenuation module, the one or more subcarriers of the OFDM signal to reduce the magnitudes of the one or more subcarriers of the OFDM signal near the center frequency of the OFDM signal, and filtering, by a notch filter, the OFDM signal to reduce the magnitude of a portion of the OFDM signal near the center frequency of the OFDM signal.

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with) another element, and not necessarily mechanically. Thus, although the schematic shown in the figures depicts one exemplary arrangement of elements, additional intervening elements, devices, features, or components may be present in one or more embodiments of the depicted subject matter.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the method(s) described herein may be implemented using software instructions stored on a computer useable storage medium for execution by a computer. As an example, an embodiment of a computer program product includes a computer useable storage medium to store a computer readable program. The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments herein may be implemented entirely in hardware or in an implementation containing both hardware and software elements. In embodiments which use software, the software may include but is not limited to firmware, resident software, microcode, or other suitable software.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A wireless communication system comprising:
transceiver circuitry configured to:
generate a plurality of Orthogonal Frequency-Division Multiplexing (OFDM) signals;
perform signal shaping of an OFDM signal of the plurality of OFDM signals to generate a shaped OFDM signal by reducing magnitudes of one or more subcarriers of the OFDM signal near a center frequency of the OFDM signal; and
wirelessly transmit the shaped OFDM signal.

2. The wireless communication system of claim 1, wherein the transceiver circuitry is further configured to:
perform signal shaping of each OFDM signal of the plurality of OFDM signals to generate a plurality of shaped OFDM signals by reducing magnitudes of one or more subcarriers of each of the plurality of OFDM signals near respective center frequencies the plurality of OFDM signals; and
wirelessly transmit the plurality of shaped OFDM signals.

3. The wireless communication system of claim 2, wherein the plurality of OFDM signals corresponds, in a frequency domain, to a plurality of OFDM symbols of at least one physical layer protocol data unit (PPDU) in accordance with a Next Generation Vehicle-to-Everything (NGV) protocol.

4. The wireless communication system of claim 3, wherein, to wirelessly transmit the plurality of shaped OFDM signals, the transceiver circuitry is further configured to:
wirelessly transmit at least a first subset of the plurality of shaped OFDM signals based on a first tone plan over a first channel having a first channel bandwidth via bonding of a second channel and a third channel each respectively having a second channel bandwidth.

5. The wireless communication system of claim 4, wherein the first channel bandwidth is 20 MHz and the second channel bandwidth is 10 MHz.

6. The wireless communication system of claim 4, wherein the first subset of the plurality of shaped OFDM signals includes a data portion of the PPDU.

7. The wireless communication system of claim 6, wherein, to wirelessly transmit the plurality of shaped OFDM signals, the transceiver circuitry is further configured to:
wirelessly transmit at least a second subset of the plurality of shaped OFDM signals based on a second tone plan over the second channel and the third channel.

8. The wireless communication system of claim 7, wherein the second subset of the plurality of shaped OFDM signals includes a first preamble portion of the PPDU and a second preamble portion of the PPDU, and wherein the transceiver circuitry is further configured to transmit the first preamble portion over the second channel and, concurrently, transmit the second preamble portion over the third channel.

9. The wireless communication system of any of claims 1 to 8, wherein the transceiver circuitry comprises a notch filter configured to reduce the magnitude of a portion of the OFDM signal near the center frequency of the OFDM signal.

10. The wireless communication system of any of claims 1 to 9, wherein the transceiver circuitry comprises a subcarrier attenuation module configured to reduce the magnitudes of the one or more subcarriers of the OFDM signal near the center frequency of the OFDM signal.

11. The wireless communication system of any of claims 1 to 10, wherein the transceiver circuitry comprises:
a notch filter configured to reduce the magnitude of a portion of the OFDM signal near the center frequency of the OFDM signal; and
a subcarrier attenuation module configured to reduce the magnitudes of the one or more subcarriers of the OFDM signal near the center frequency of the OFDM signal.

12. A method comprising:
generating, by transceiver circuitry of a wireless communication system, a plurality of Orthogonal Frequency-Division Multiplexing (OFDM) signals;
performing, by the transceiver circuitry, signal shaping of an OFDM signal of the plurality of OFDM signals to generate a shaped OFDM signal by reducing magnitudes of one or more subcarriers of the OFDM signal near a center frequency of the OFDM signal; and
wirelessly transmitting, by the transceiver circuitry, the shaped OFDM signal.

13. The method of claim 12, further comprising:
performing, by the transceiver circuitry, signal shaping of each OFDM signal of the plurality of OFDM signals to generate a plurality of shaped OFDM signals by reducing magnitudes of one or more subcarriers of each of the plurality of OFDM signals near respective center frequencies the plurality of OFDM signals; and
wirelessly transmitting, by the transceiver circuitry, the plurality of shaped OFDM signals.

14. The method of claim 13, wherein the plurality of OFDM signals corresponds to a plurality of OFDM symbols representing a physical layer protocol data unit (PPDU) in accordance with a Next Generation Vehicle-to-Everything (NGV) protocol.

15. The method of claim 14, wherein wirelessly transmitting the plurality of shaped OFDM signals further comprises:
wirelessly transmitting, by the transceiver circuitry, at least a first subset of the plurality of shaped OFDM signals based on a first tone plan over a first channel having a first channel bandwidth via channel bonding of a second channel and a third channel each respectively having a second channel bandwidth.

## Amended claims

### Amended claims in accordance with Rule 137(2) EPC.

1. A wireless communication system comprising:
transceiver circuitry (602) configured to:
generate a plurality of Orthogonal Frequency-Division Multiplexing, OFDM, signals;
perform signal shaping of an OFDM signal of the plurality of OFDM signals to generate a shaped OFDM signal by reducing magnitudes of one or more subcarriers of the OFDM signal near a center frequency of the OFDM signal; and
wirelessly transmit the shaped OFDM signal;
wherein the transceiver circuitry comprises a one of:
a notch filter (618) configured to reduce the magnitude of a portion of the OFDM signal near the center frequency of the OFDM signal; and
a subcarrier attenuation module (612) configured to reduce the magnitudes of the one or more subcarriers of the OFDM signal near the center frequency of the OFDM signal.

2. The wireless communication system of claim 1, wherein the transceiver circuitry is further configured to:
perform signal shaping of each OFDM signal of the plurality of OFDM signals to generate a plurality of shaped OFDM signals by reducing magnitudes of one or more subcarriers of each of the plurality of OFDM signals near respective center frequencies the plurality of OFDM signals; and
wirelessly transmit the plurality of shaped OFDM signals.

3. The wireless communication system of claim 2, wherein the plurality of OFDM signals corresponds, in a frequency domain, to a plurality of OFDM symbols of at least one physical layer protocol data unit, PPDU, (300) in accordance with a Next Generation Vehicle-to-Everything, NGV, protocol.

4. The wireless communication system of claim 3, wherein, to wirelessly transmit the plurality of shaped OFDM signals, the transceiver circuitry is further configured to:
wirelessly transmit at least a first subset of the plurality of shaped OFDM signals based on a first tone plan over a first channel having a first channel bandwidth via bonding of a second channel and a third channel each respectively having a second channel bandwidth.

5. The wireless communication system of claim 4, wherein the first channel bandwidth is 20 MHz and the second channel bandwidth is 10 MHz.

6. The wireless communication system of claim 4, wherein the first subset of the plurality of shaped OFDM signals includes a data portion (308) of the PPDU.

7. The wireless communication system of claim 6, wherein, to wirelessly transmit the plurality of shaped OFDM signals, the transceiver circuitry is further configured to:
wirelessly transmit at least a second subset of the plurality of shaped OFDM signals based on a second tone plan over the second channel and the third channel.

8. The wireless communication system of claim 7, wherein the second subset of the plurality of shaped OFDM signals includes a first preamble portion (316) of the PPDU and a second preamble portion (318) of the PPDU, and wherein the transceiver circuitry is further configured to transmit the first preamble portion over the second channel and, concurrently, transmit the second preamble portion over the third channel.

9. A method comprising:
generating, by transceiver circuitry (602) of a wireless communication system, a plurality of Orthogonal Frequency-Division Multiplexing, OFDM, signals;
performing, by the transceiver circuitry, signal shaping of an OFDM signal of the plurality of OFDM signals to generate a shaped OFDM signal by reducing magnitudes of one or more subcarriers of the OFDM signal near a center frequency of the OFDM signal; and
wirelessly transmitting, by the transceiver circuitry, the shaped OFDM signal;
wherein performing the signal shaping of the OFDM signal includes at least one of:
filtering, by a notch filter (618), the OFDM signal to reduce the magnitude of a portion of the OFDM signal near the center frequency of the OFDM signal; and
attenuating, by a subcarrier attenuation module (612), the one or more subcarriers of the OFDM signal to reduce the magnitudes of the one or more subcarriers of the OFDM signal near the center frequency of the OFDM signal.

10. The method of claim 9, further comprising:
performing, by the transceiver circuitry, signal shaping of each OFDM signal of the plurality of OFDM signals to generate a plurality of shaped OFDM signals by reducing magnitudes of one or more subcarriers of each of the plurality of OFDM signals near respective center frequencies the plurality of OFDM signals; and
wirelessly transmitting, by the transceiver circuitry, the plurality of shaped OFDM signals.

11. The method of claim 10, wherein the plurality of OFDM signals corresponds to a plurality of OFDM symbols representing a physical layer protocol data unit, PPDU, (300) in accordance with a Next Generation Vehicle-to-Everything, NGV, protocol.

12. The method of claim 11, wherein wirelessly transmitting the plurality of shaped OFDM signals further comprises:
wirelessly transmitting, by the transceiver circuitry, at least a first subset of the plurality of shaped OFDM signals based on a first tone plan over a first channel having a first channel bandwidth via channel bonding of a second channel and a third channel each respectively having a second channel bandwidth.
